## Europäisches Patentamt

## European Patent Office

## Office européen des brevets

(19)

(11) Veröffentlichungsnummer: **0 176 547 B1**

# EUROPÄISCHE PATENTSCHRIFT

(12)

(45) Veröffentlichungstag der Patentschrift:
28.12.88

(21) Anmeldenummer: 85901546.3

(22) Anmeldetag: 02.04.85

(86) Internationale Anmeldenummer:
PCT/HU 85/00023

(87) Internationale Veröffentlichungsnummer:
WO 85/04452 (10.10.85 Gazette 85/22)

(51) Int. Cl.⁴: **F 03 B 13/12**, F 03 B 13/08

(54) **HYDROPNEUMATISCHE WASSERKRAFTMASCHINE.**

(30) Priorität: 02.04.84 HU 131084

(43) Veröffentlichungstag der Anmeldung:
09.04.86 Patentblatt 86/15

(45) Bekanntmachung des Hinweises auf die Patenterteilung:
28.12.88 Patentblatt 88/52

(84) Benannte Vertragsstaaten:
AT BE DE FR GB IT NL SE

(56) Entgegenhaltungen:
DE-A- 2 365 197
DE-A- 2 921 381
FR-A- 2 272 274
FR-A- 2 479 343
US-A- 1 029 030
US-A- 1 523 031
US-A- 2 715 366
US-A- 4 208 878

(73) Patentinhaber: KENDERI, Tibor, Kelenhegyi ut 49,
H-1118 Budapest (HU)

(72) Erfinder: KENDERI, Tibor, Kelenhegyi ut 49,
H-1118 Budapest (HU)

(74) Vertreter: Kern, Wolfgang Dipl.-Ing. et al, Patentanwälte
Kern, Brehm & Partner Albert-Rosshaupter-Strasse 73,
D-8000 München 70 (DE)

## Beschreibung

*Technisches Gebiet der Erfindung*

Die Erfindung betrifft eine hydropneumatische Wasserkraftmaschine, in welcher ein durch sich in ständig langsamer Bewegung befindliche grosse Wassermengen betätigter, als doppelwirkende Kolbenpumpe für eine hydraulische Druckflüssigkeit ausgelegter Arbeitszylinder diese Druckflüssigkeit in einem an sich bekannten Zweiphasen-Hydropneumatischen Druckspeicher auf einen voreingestellten hohen Druck bringt, und die Energie dieser Druckflüssigkeit im Entspannungsraum einer bekannten Strömungsmaschine in mechanische Arbeit bzw. in einem gekoppelten Generator in elektrische Energie umgewandelt wird.

*Beschreibung des Standes der Technik*

Bereits seit Jahrtausenden sind Wasserkraftmaschinen bekannt, welche die Energie von strömenden oder aus Höhenlagen herabfallenden Oberflächengewässern zum Antreiben von verschiedenen Arbeitsmaschinen, insbesondere von Mühlen, Wasserhebemaschinen usw. verwerten. Es sind ferner auch Einrichtungen und Anlagen bekannt, in welchen der Seegang, d.h. die durch Ebbe und Flu bewirkte periodische Wasserpegelschwankung oder die kinetische Energie des ständigen Wellenganges der Weltmeere nutzbar gemacht wird.

Mit Schaufelrädern angetriebene Wassermühlen sind auch heutzutage noch vielerorts in Betrieb, obwohl derartige technische Lösungen immer mehr nur noch als Überbleibsel und Baudenkmäler veralteter Technik einer älteren Zeit angesehen werden.

Die bekanntesten Typen zeitgenössischer Wasserkraftmaschinen verkörpern die verschiedenen Ausführungen von Wasserturbinen. Zum Betrieb von Turbinen sind jedoch ein hoher Druck bzw. dementsprechend hohe Wasser-Strömungsgeschwindigkeiten erforderlich. Es sind beispielsweise Wasserkraftwerke bekannt, bei welchen die Fallhöhe, d.h. der Pegelunterschied zwischen der Oberwasserseite und der Unterwasserseite mehr als 200 m beträgt. Zwecks Erreichung der erforderlichen Fallhöhe bzw. einer hinreichenden Speisewasser-Vorratsmenge werden Stauwehre, nicht selten Talsperren als grosse Bauvorhaben errichtet. Dadurch ist zwar meistens ein hinreichend gutes technisches Resultat gewährleistet, jedoch sind die im allgemeinen äusserst hohen Investitionskosten sehr nachteilig. Ausserdem sind derartige Bauvorhaben mit oftmals katastrophalen umweltschädigenden Auswirkungen verbunden.

Aus der FR-A-2 272 274 ist eine Wasserkraftmaschine bzw. -anlage der im Oberbegriff des Anspruchs 1 genannten Art bekannt, die jedoch als Hochsee- oder Grossdeichanlage ausgelegt ist und wirtschaftlich nur bei erheblichen durch Ebbe und Flut bedingten Pegelstandsänderungen sowie starkem Wellengang be trieben werden kann. Wesentlich dabei ist, dass die Anlage keinerlei Mittel aufweist, durch die eine kontinuierliche Arbeitsweise der Maschine auch dann gewährleistet ist, wenn spontane Wasserstands- bzw. Pegelstandsänderungen auftreten.

Der Erfindung liegt die Aufgabe zugrunde, eine Wasserkraftmaschine zu schaffen, welche die Nutzbarmachung der Energie von sich langsam bewegenden grossen Wassermengen in einer den modernen Anforderungen entsprechenden Form ermöglicht.

Diese Aufgabe wird erfindungsgemäss dadurch gelöst, dass der Schacht in einem Stauwehr eines Oberflächengewässers ausgebildet und beiderseits des Wehrs mit wenigstens einer unterhalb der Wasseroberfläche angeordneten, durch abwechselnd gegensinnig gesteuerte Sperrorgane gesteuert verschliessbaren Durchlassöffnungen versehen ist.

Zur betriebsmässigen Steuerung der erfindungsgemässen Wasserkraftmaschine dient eine Einrichtung, welche vorzugsweise mindestens Pegelstandfühler für den Ober- und den Unterwasserstand mit beinhaltet und in sinngemässe Abhängigkeit von der Änderung der beiderseits des Wehrs jeweils vorhandenen Wasserstandshöhen die Sperrorgane steuert.

In vorteilhaften Weiterbildungen der erfindungsgemässen Wasserkraftmaschine ist für die hydraulische Druckflüssigkeit ein geschlossener Kreislauf vorgesehen. Hierbei kann der als doppeltwirkende Kolbenpumpe ausgelegte Arbeitszylinder über eine Saugleitung saugseitig mit einem dem Entspannungsraum der Strömungsmaschine zugeordneten Vorratsbecken zur Sammlung der entspannten Druckflüssigkeit verbunden sein.

Die erfindungsgemässe Wasserkraftmaschine ist in der Lage, die Energie von sich langsam bewegenden bzw. in langsamer Bewegung befindlichen hohen Wassermengen in mechanische Arbeit (in Rotationsbewegung einer Antriebswelle mit entsprechendem Drehmoment) umsetzen. Es hat sich als besonders vorteilhaft erwiesen, falls die Strömungsmaschine, die wie erwähnt sowohl eine Turbine wie auch ein Hydromotor sein kann, mit einem Generator zur elektrischen Energieerzeugung antriebsverbunden ist.

Als hydraulische Druckflüssigkeit können die an sich bekannten Hydrauliköle oder aber auch Wasser, das durch Zugabe von geeigneten Additiven hinreichend schmierfähig gemacht und schaumgebremst ist, verwendet werden. Auch für die Verhinderung von Korrosionsschäden soll dabei naturgemäss Sorge getragen werden.

Bereits aus den obigen wesentlichen Merkmalen der erfindungsgemässen neuen Wasserkraftmaschine dürfte klar ersichtlich sein, dass sie bereits bei geringen Pegelstandunterschieden von 1–2 Metern zwischen Ober- und Unterwasser voll betriebsfähig ist, und der Druck der zur Arbeitsübertragung verwendeten hydraulischen Druckflüssigkeit kann ohne jegliche Schwierigkeit auf einen zwischen 6 bis 10 kp/cm$^2$ liegenden konstanten Wert, der bei Wasserkraftmaschinen bereits als ideell bezeichnet werden kann, gebracht werden.

Aus der erfindungsgemässen Lösung resultiert ferner, dass mit der gut schmierfähigen und von Verschleiss verursachenden Verunreinigungen völlig freien hydraulischen Druckflüssigkeit auch Hydromotore zum Antrieb von stromerzeugenden Generatoren direkt angetrieben werden können, wobei der Wirkungsgrad derartiger Hydromotore denjenigen von Turbinen bekanntlich mehrfach übersteigt.

Die besonders vorteilhaften Anwendungsmöglichkeiten der Erfindung können in erster Linie auf die folgenden charakteristischen Merkmale zurückgeführt werden:

Die erfindungsgemässe Wasserkraftmaschine kann bei Stauwerten, die unterhalb der Hochwasser-Pegelhöhe der Oberflächengewässer, insbesondere Flüsse liegen, betrieben werden. Demzufolge kann auf die Errichtung von speziellen Schutzdammsystemen verzichtet werden und somit wird die gegebene, naturbedingte Umgebung der Flüsse unberührt belassen. Es besteht daher keine Gefahr von Umweltbeschädigung.

Die Erfindung ermöglicht die Ausnutzung und Nutzbarmachung der Energie von Flüssen, welche hohe Wassermengen mit geringem Gefälle führen. Ebenfalls ist es gut möglich, die kinetische Energie eines geringen periodischen Seeganges mit Pegelstandsunterschieden von nur 1–2 m zwischen Ebbe und Flut zur Energiegewinnung zu verwerten.

Die erfindungsgemässe Wasserkraftmaschine kann auch bei alternativ wechselnden Wasserständen, d.h. bei ständigem Wechsel von Ober- und Unterwasserseite beiderseits des errichteten Wehres betrieben werden. Hierdurch werden grundsätzlich neue Nutzungsmöglichkeiten des periodischen Seeganges, d.h. der periodischen Schwankung des Seewasserspiegels zwischen Ebbe und Flut eröffnet.

Zur technischen Verwirklichung, Realisierung der erfindungsgemässen Wasserkraftmaschine sind neue oder speziell zweckgerichtet zu entwickelnde Werkstoffe und/oder Technologien nicht erforderlich. Sämtliche Bestandteile und Baugruppen können aus industriell bereits jahrzehntelang in breitem Umfang hergestellten und erprobten Elementen aufgebaut sein.

Erfindungsgemässe Wasserkraftmaschinen und Energieerzeugungssysteme, die solche Maschinen als Einheiten oder Baugruppen beinhalten, können schliesslich – insbesondere als Folge des nur geringen Stauhöhenbedarfes – mit geringem Investkostenaufwand und risikofrei errichtet werden.

## Kurze Beschreibung der Zeichnungsfiguren

Das Wesen der Erfindung sowie die Wirkungsweise und weitere Merkmale der erfindungsgemässen Wasserkraftmaschine werden nachstehend an einem Ausführungsbeispiel unter Bezugnahme auf die beiliegende Zeichnung näher beschrieben. In der Zeichnung sind

Fig. 1 ein stark vereinfachtes Funktions- und Blockschaltbild einer beispielsweisen Ausführung einer erfindungsgemässen Wasserkraftmaschine, und

Fig. 2 eine auszugsweise Teildraufsicht eines Wehres, in welchem nebeneinander in Reihe angeordnet mehrere Schächte und Schwimmkörper erfindungsgemäss vorhanden sind.

## Beschreibung eines Ausführungsbeispiels der Erfindung

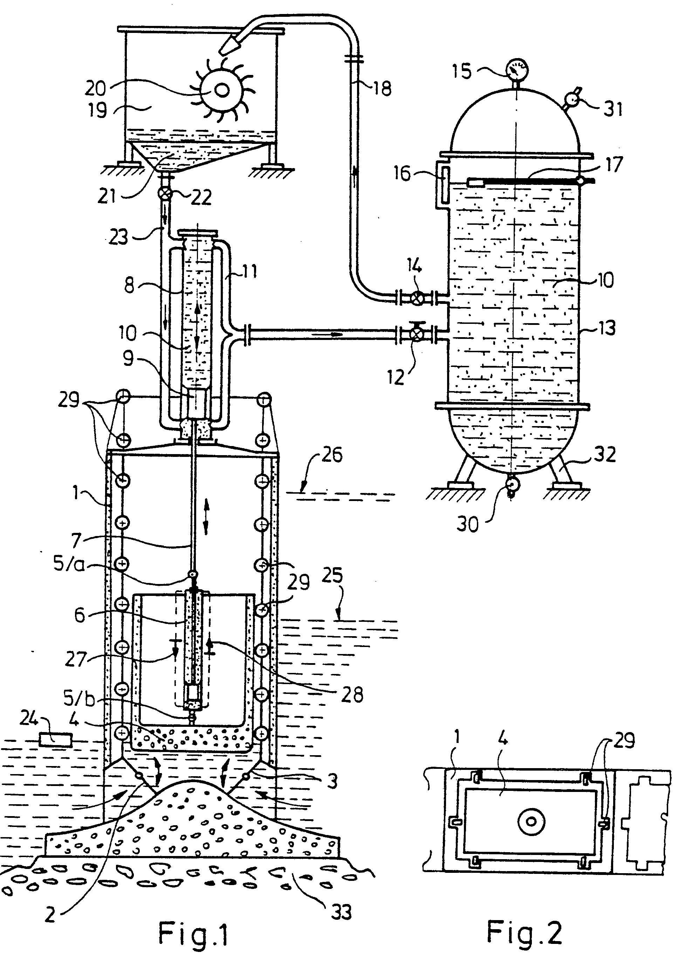

Fig. 1 zeigt in stark vereinfachtem Schnittbild eine beispielsweise Anordnung von Funktionseinheiten einer erfindungsgemässen Wasserkraftmaschine. An einer geeignet vorgesehenen Stelle eines Oberflächenwassers, beispielsweise Flusses ist in einer hinreichend verfestigten Wassersohle 33 ein Wehr verankert, in welchem erfindungsgemäss mindestens ein im wesentlichen vertikaler innerer Schacht 1 vorhanden ist. Fig. 2 zeigt in auszugsweiser Draufsicht, dass im Wehr nebeneinander mehrere derartige Schächte 1 ausgebildet sein können, wodurch aus erfindungsgemässen Wasserkraftmaschinen komplette Anlagen zusammengesetzt werden können. Das Wehr selbst kann aus vorgefertigten, am Schauplatz aneinander gereihten Schachtelementen in voller Flussbreite bestehen. Im Schacht 1 ist ein hinreichend gewichtiger Schwimmkörper 4 mittels Rollen 29 in vertikaler Richtung freibeweglich geführt. In Wassersohlennähe ist der Innenraum des Schachtes 1 jeweils über mittels Sperrorgane 2, 3 steuerbar verschliessbare Durchlassöffnungen sowohl oberwasserseitig wie auch unterwasserseitig mit der umgebenden Wassermenge verbindbar. Der Schwimmkörper 4 ist über ein mit Hilfe von einem Nachstellzylinder 6 und Zahnradpumpen 27, 28 längenverstellbares Gestänge mit einer Kolbenstange 7 eines Kolbens 9 eines druckseitig auf den Flüssigkeitsraum eines hydropneumatischen Druckspeichers 13 arbeitenden, als doppeltwirkende Kolbenpumpe für eine hydraulische Druckflüssigkeit 10 ausgelegten Arbeitszylinders 8 in beiden Richtungen kraft- und bewegungsübertragend verbunden. Das Gestänge zwischen Schwimmkörper 4 und Kolben 9 beinhaltet auch zwei Kugelgelenke 5/a und 5/b zur klemmfreien Bewegungsübertragung. Der Flüssigkeitsraum des auf Stützbeinen 32 stehenden Druckspeichers ist einerseits über eine ein Druckregelventil 12 beinhaltende Pumpleitung 11 mit den beiden Zylinderäumen des Arbeitszylinders 9, andererseits über ein Auslassventil 14 und eine anschliessende Druckleitung 18 mit einem Entspannungsraum 19 einer Strömungsmaschine, die hier durch das Laufrad einer Turbine 20 versinnbildlicht ist, verbunden. Der Druckspeicher 13 ist ein an sich bekanntes Druckgefäss, welches oberhalb des jeweils vorherrschenden Flüssigkeitspiegels komprimierte Druckluft vom jeweiliger Pegelhöhe abhängigen Druck enthält, und unten mit einem Ablassventil 30 zur Entleerung und Füllung sowie Reinigung, oben mit einer Druckanzeige 15, ferner mit einer Niveauanzeige 16 sowie einem eingebauten Pegelstandgeber 17 für Fernsteuerungszwecke versehen ist.

Um einen geschlossenen Kreislauf für die hydraulische Druckflüssigkeit 10 zu verwirklichen, ist ein dem Entspannungsraum 19 der Turbine 20 zugeordneter Vorratsbecken 21, in welchem die entspannte Druckflüssigkeit 10 aufgefangen und gesammelt wird, über ein Ventil 22 und eine Saugleitung 23 mit den Saugseiten des (durch eingebaute druckgesteuerte Rückschlagventile auf an sich bekannte Weise) als doppelwirkende Kolbenpumpe ausgelegten Arbeitszylinders 8 verbunden.

Zur (nicht ausführlich dargestellten) Einrichtung zur selbsttätigen Steuerung der Maschine gehören ferner beiderseits des Wehres jeweils in der Oberwasserseite bzw. Unterwasserseite angeordnete Pegelstandfühler 25, 24. Bezugszeichen 26 verdeutlicht den Höchstwasserpegel, den der Wasserstand an der Oberwasserseite erreichen darf.

Die auf obige Weise aufgebaute, in der Fig. 1 in ausserbetrieblichem Ruhezustand dargestellte erfindungsgemässe Wasserkraftmaschine arbeitet auf folgende Weise:

Beim Öffnen des Sperrorgans 3 strömt Wasser von der Oberwasserseite in den Schacht 1 hinein, und der Schwimmkörper 4 wird angehoben. Über das Gestänge wird nun der Kolben 9 des Arbeitszylinders 8 nach oben bewegt, und es wird Druckflüssigkeit 10 über die Pumpleitung 11 aus dem oberen Zylinderraum in den Druckspeicher 13 gepumpt. Die Druckluft im Speicher wird weiter komprimiert, es entsteht ein Druckanstieg. Der konstante Sollwert des im Druckspeicher 13 herrschenden Druckes wird durch das Druckregelventil nach oben begrenzt. Wird nun das Auslassventil 14 geöffnet, so strömt die Druckflüssigkeit 10 über die Druckleitung 18 dem Entspannungsraum 19 der Turbine 20 zu, und sie wird bei gleichzeitiger arbeitsverrichtender Beaufschlagung des Laufrades, wodurch es in Drehung versetzt wird, entspannt. Die Turbine 20, oder ein anstelle einer Turbine auch verwendbarer Hydromotor kann beispielsweise mit einem Generator zur Erzeugung von elektrischen Energie antriebsverbunden sein. Aus dem Vorratsbecken 21 wird beim Öffnen des Ventils 22 über die Saugleitung 23 die entspannte Druckflüssigkeit in den Arbeitszylinder 8 (je nach Hubrichtung in den unteren oder oberen Zylinderraum) zurückgesaugt.

Nachdem der Schwimmkörper 4 seine obere Endlage erreicht hat, wird durch ein Signal der Einrichtung zur selbsttätigen Steuerung der Maschine das Sperrorgan 3 geschlossen, und es wird das Sperrorgan 2 geöffnet. Das Wasser strömt aus dem Schacht 1 aus, der Schwimmkörper beginnt unter Wirkung der Schwerkraft nach unten zu sinken, wodurch der als Pumpe wirkende Arbeitszylinder 8 zwar in entgegengesetzter Richtung, aber ebenfalls auf den Druckspeicher 13 arbeitet. Wird nun die untere Endlage des Schwimmkörpers 4 erreicht, so wird das Sperrorgan 2 geschlossen, das Sperrorgan 3 geöffnet, und der obenbeschriebene Vorgang kann zyklisch von neuem wiederholt werden. Dadurch ist ein stationärer Betrieb gewährleistet.

Wasserstandsänderungen infolge Ertragsschwankungen wie Hochwasser oder Trockenheitsperioden werden durch die beiden Pegelstandfühler, 24, 25 ständig überwacht. Ihre Signale dienen dazu, die Länge des kraft- und bewegungsübertragenden Gestänges durch Betätigung des Nachstellzylinders 6 mit Hilfe der Zahnradpumpen 27, 28 an die jeweiligen Wasserstandshöhen der Oberwasserseite und der Unterwasserseite anzupassen. Die Zahnradpumpen 27, 28 können beispielsweise Hochdruckpumpen von geringer Förderleistung sein. Die zur Führung des Schwimmkörpers 4 dienende Rolle 29 dienenden Rollen 29 sind zweckmässig freilaufend vorgelagerte Räder oder Rollen, die mit einem elastischen, vorzugsweise aus Gummi bestehenden Laufbelag versehen sind. Von Zeit zu Zeit kann erforderlich sein, für die Druckluftverluste im Druckspeicher 13 über ein Nachfüllventil 31 durch Einpressen von Pressluft aufzukommen.

Um einen weitgehend pulsierungsfreien Betrieb zu gewährleisten, ist es angebracht und von Vorteil, auf einen einzigen hydropneumatischen Druckspeicher 13 gleichzeitig mehrere, von mehreren Schwimmkörpern 4 aus möglichst phasenverschoben betätigte Arbeitszylinder 8 als doppelwirkende Kolbenpumpen arbeiten zu lassen.

Aus derartig zusammengesetzten Baugruppen der erfindungsgemässen Wasserkraftmaschine können ganze Kraftwerksanlagen aufgebaut werden.

**Patentansprüche**

1. Hydropneumatische Wasserkraftmaschine mit einem in einem Schacht (1) senkrecht geführten, bewegbaren Schwimmkörper (4), der über ein Gestänge mit einer Flüssigkeitspumpe, insbesondere dem Kolben (9) eines druckseitig auf die Flüssigkeit (10) eines vorzugsweise hydropneumatischen Druckspeichers (13), als doppelt wirkende Kolbenpumpe für hydraulische Druckflüssigkeit ausgelegten Arbeitszylinders (8) in beiden Hubrichtungen kraft- und bewegungsübertragend verbunden ist, wobei die Flüssigkeit (10) des Druckspeichers (13) zu ihrer arbeitverrichtenden Entspannung über eine Druckleitung (18) mit dem Entspannungsraum (19) einer Strömungsmaschine, insbesondere einer Turbine (20) oder eines Hydromotors, verbunden ist, dadurch gekennzeichnet, dass der Schacht (1) in einem Stauwehr eines Oberflächengewässers ausgebildet und beiderseits des Wehres mit wenigstens einer unterhalb der Wasseroberfläche angeordneten, durch abwechselnd gegensinnig gesteuerte Sperrorgane (2, 3) gesteuert verschliessbaren Durchlassöffnung versehen ist.

2. Hydropneumatische Wasserkraftmaschine nach Anspruch 1, dadurch gekennzeichnet, dass beiderseits des Stauwehres Pegelstandsfühler (24, 25) für den Ober- und Unterwasserstand vorhanden sind, mittels derer die Länge des Gestänges zwischen Schwimmkörper (4) und Kolben (9) an insbesondere den Oberwasserstand automatisch anpassbar ist.

## Revendications

1. Machine hydraulique hydropneumatique comportant un corps flottant mobile (4) se déplaçant verticalement dans un puits (1), lequel corps flottant est relié par l'intermédiaire d'une tringlerie de façon à assurer la transmission de travail et de mouvement dans les deux sens de sa course, à une pompe à liquide, en particulier au piston (9) d'un cylindre de travail (8) conçu comme pompe à piston à double effet pour un fluide hydraulique sous pression, lequel cylindre agissant côté refoulement sur le fluide (10) d'un accumulateur hydraulique (13) de préférence hydropneumatique, le fluide (10) dudit accumulateur hydraulique (13) étant relié au moyen d'une conduite forcée (18), en vue de sa détente se transformant en travail, à la chambre de détende (19) d'une machine utilisant la dynamique des fluides, en particulier d'une turbine (20) ou d'un hydromoteur, caractérisée en ce que le puits (1) est ménagé dans la digue-réservoir d'un cours d'eau superficiel et pourvu des deux côtés de la digue d'au moins un orifice de passage disposé au-dessous de la surface d'eau, la fermeture dudit orifice pouvant être commandée au moyen d'organes d'arrêt (2, 3) commandés à tour de rôle en sens inverse.

2. Machine hydraulique hydropneumatique selon la revendication 1, caractérisée en ce que des deux côtés de la digue-réservoir se trouvent des senseurs de niveau (24, 25) pour les niveaux d'eau amont et aval, au moyen desquels la longueur de la tringlerie entre le corps flottant (4) et le piston (9) peut être adaptée automatiquement en particulier au niveau d'eau amont.

## Claims

1. Hydropneumatic hydroelectric power plant comprising a floating body (4), vertically guided and movable within a pit (1), which body is connected through a linkage to a liquid pump, especially the piston (9) of an operating cylinder (8) which is acting on its pressure side onto the liquid (10) of a preferably hydropneumatic pressure store (13) as double acting piston pump for hydraulic pressure liquid in both directions of the stroke in a force transmitting and movement transmitting manner, wherein the liquid (10) of the pressure store (13) is connected through a pressure line (18) to the expending space (19) of a fluid engine, especially a turbine (20) or a hydro-engine for delivering performance by expansion, characterized in that the pit (1) is configured within a spillway of a surface water and is provided on both sides of the spillway with at least one throughput-opening located beneath the water surface and closable by alternatingly reversable controlled closure elements (2, 3).

2. Hydropneumatic hydroelectric power plant according to Claim 1, characterized in that at both sides of the spillway level sensors (24, 25) for the upper water level and the lower water level are provided, by means of which the length of the linkage between the floating body (4) and the piston (9) is automatically adapted especially to the upper water level.

Fig.1

Fig.2